# EUROPEAN PATENT APPLICATION

(11) **EP 4 455 056 A2**
(43) Date of publication of application: **30.10.2024**
(21) Application number: 24171113.4
(22) Date of filing: 18.04.2024
(51) Int. Cl.: B65G 1/08, B65G 47/88

(54) **DEVICE FOR RETAINING AND EXPELLING PACKAGES, PARTICULARLY OF MEDICINES OR THE LIKE, FROM AN INCLINED CHUTE IN A CABINET OF AN AUTOMATED STORAGE SYSTEM, AND CHUTE WITH SUCH A DEVICE**

(30) Priority: 28.04.2023 IT 202300008331
(71) Applicant: Label Elettronica S.R.L., 35010 Limena (PD) (IT)
(72) Inventor: RAMI, Enrico, 36047 MONTEGALDA VI (IT)
(74) Representative: Modiano, Micaela Nadia

(57) **Abstract**

A device (10) for retaining and expelling packages from an inclined chute (11) of an automated storage system, comprising:
- means (12) for actuation of an assembly (13) for expelling and stopping one or more packages,
- the expelling and stopping assembly (13),
- means (14) for varying the pushing power of the expelling and stopping assembly (13).

## Description

The present invention relates to a device for retaining and expelling packages, particularly of medicines or the like, from an inclined chute of a cabinet of an automated storage system.

The invention also relates to a chute for a cabinet of an automated storage system with such a device.

Nowadays in the sale, for example, of medicines, automated storage systems are widely used which comprise cabinets fitted with inclined chutes, which are stocked with rows of consecutive packages of medicines, to facilitate the expulsion thereof.

Below the chutes, on the side where the lower ends of the inclined chutes are facing, there are conveyor belts that are adapted to receive the packages that are dispensed by the chutes.

Such inclined chutes are provided, at the lower end, with a retention element that holds the leading package in the row, in order to prevent the spontaneous dispensing thereof, and often they are also provided with expulsion devices for dispensing the packages on command.

In a storage system automated in this way, the expulsion devices can be commanded to actuate the expulsion of a previously chosen number of packages, from selected chutes.

Once expelled, the packages fall on the conveyor belts which transports them to a collection point where they are made available to the operator who requested them.

Many expulsion devices known today are provided with an expulsion element connected to a mechanism moved by an actuator, for example an electromagnetic actuator.

The mechanism is adapted to cause the rotation of the expulsion element, after which it is usually facing an open window on the bottom of the chute, proximate to the lower end of the latter, while lifting the leading package, i.e. the package nearest to the lower end of the inclined chute.

Such prior art has a number of aspects that show room for improvement.

In fact, with conventional devices, if there are particularly heavy packages inside the chute, an unwanted expulsion can happen, or a greater number of packages can be dispensed than that requested, because the ejector is not capable of effectively stopping the travel of the product and its acceleration caused by its considerable weight.

Similarly, if there are particularly heavy packages, their weight can lead them to jam the movement of the ejector during its return to the original start position.

Furthermore, with conventional devices it is not possible to vary the pushing power, and therefore the speed, of the movement from the initial start position, for retaining the package, to the position for the expulsion/egress of the package, as a function of the characteristics of the latter, such as the weight, shape, dimensions, and materials of the package.

This leads to considerable consumption, higher than necessary, and/or a push/hold that is not always sufficient, with problems in the operation of the device or the unwanted egress of packages from the chute.

Also, in inclined chutes of conventional automated storage systems, it is not possible to automatically verify the correct expulsion of the selected product, and in the event of a failed expulsion it is necessary for the operator to investigate the problem personally/visually.

The aim of the present invention is to provide a device for retaining and expelling packages from an inclined chute of an automated storage system, and a chute with such a device, which are capable of improving the prior art in one or more of the above-mentioned aspects.

Within this aim, an object of the invention is to provide a device for retaining and expelling packages from an inclined chute of an automated storage system, and a chute with such a device, which make it possible to avoid the unwanted expulsion of packages from the chute, even for packages of considerable bulk and/or weight and/or with a high center of gravity and/or loaded vertically.

Another object of the invention is to provide a device for retaining and expelling packages from an inclined chute of an automated storage system, and a chute with such a device, which make it possible to vary the pushing power, and therefore the speed, of the movement from the initial start position, for retaining the package, to the position for the expulsion/egress of the package, as a function of the characteristics of the latter, such as the weight, shape, dimensions, and materials of the package.

A further object of the invention is to provide a device for retaining and expelling packages from an inclined chute of an automated storage system, and a chute with such device, which enable an automatic verification of the successful expulsion of the selected package.

Another object of the invention is to provide an ejector capable of retaining and expelling packages without additional devices, i.e. a single element that is capable of retaining and expelling packages.

A further object of the present invention is to overcome the drawbacks of the prior art in an alternative manner to any existing solutions.

Not least an object of the invention is to provide a device for retaining and expelling packages from an inclined chute of an automated storage system, and a chute with such device, which are highly reliable, easy to implement, and at low cost.

This aim and these and other objects which will become more apparent hereinafter are achieved by a device for retaining and expelling packages from an inclined chute of an automated storage system, said device being characterized in that it comprises:
- actuation means for actuation of an expelling and stopping assembly for expelling and stopping one or more packages,
- said expelling and stopping assembly,
- means for varying the pushing power of said expelling and stopping assembly.

This aim and these and other objects which will become better apparent hereinafter are also achieved by a chute with such a device.

Further characteristics and advantages of the invention will become better apparent from the detailed description that follows of a preferred, but not exclusive, embodiment of the device for retaining and expelling packages from an inclined chute of an automated storage system, and a chute with such a device, according to the invention, which are illustrated by way of non-limiting example in the accompanying drawings wherein:
- Figure 1 is an overall perspective view of an inclined chute for an automated storage system, according to the invention;
- Figures 2a and 2b are enlarged views of a detail of the chute of Figure 1;

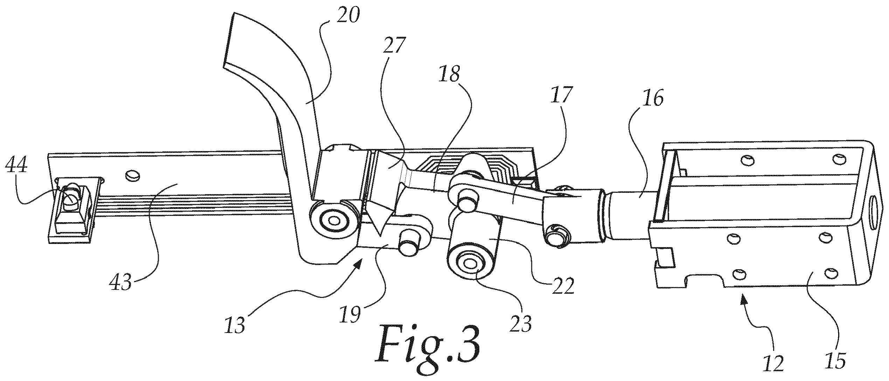

- Figure 3 is a perspective view of a portion of the device for retaining and expelling packages from an inclined chute of an automated storage system, according to the invention;

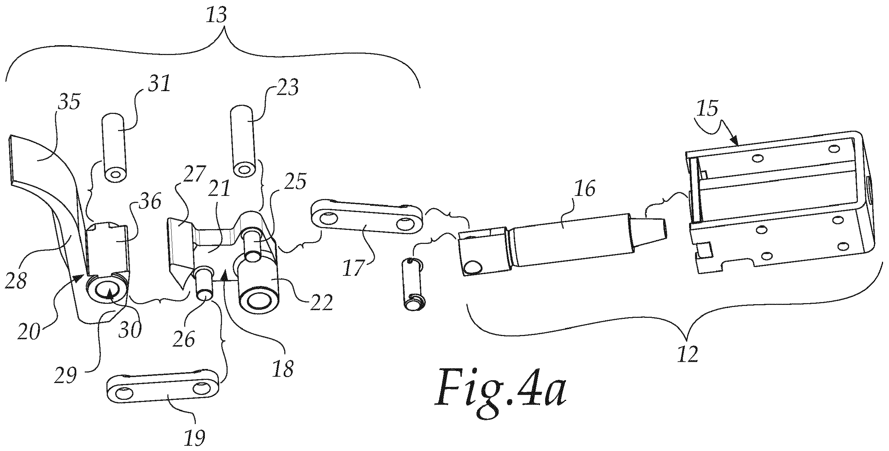

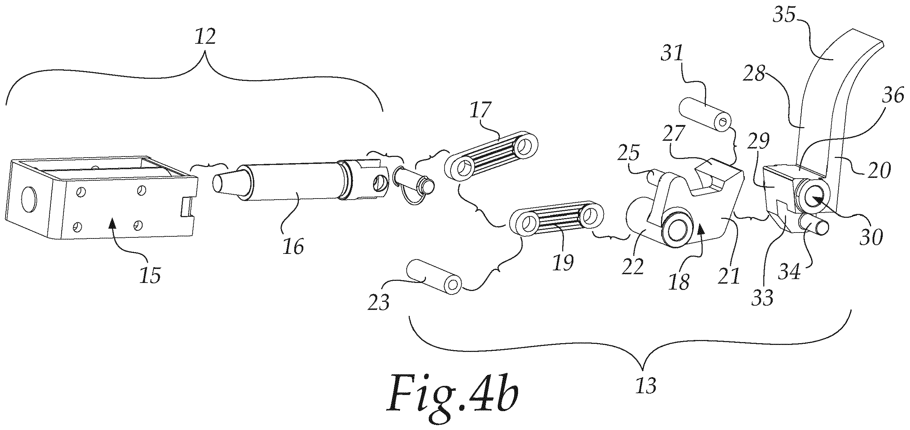

- Figures 4a and 4b are exploded views of a portion of the device of Figure 3;
- Figures 5a and 5b are views of two different steps and/or operating configurations of the device of Figure 3.

With reference to the figures, a device for retaining and expelling packages from an inclined chute of an automated storage system, according to the invention, is generally designated by the reference number 10.

The device 10 is used in a chute 11 of an automated storage system, not shown in the figures.

For the sake of simplicity, only one of the side walls of the chute is shown in the drawings, designated with the reference numeral 2, and the other side wall is formed by the side wall of the next chute, not shown in the figures.

The device 10 comprises:
- means 12 for actuation of an assembly 13 for expelling and stopping one or more packages, not shown in the figures,
- such expelling and stopping assembly 13,
- means 14 for varying the pushing power of the expelling and stopping assembly 13.

In particular, the actuation means 12 comprise an electromagnetic actuator 15 which supports an actuation rod 16.

The expelling and stopping assembly 13 comprises:
- a first linkage 17, which is hinged:
   - to the rod 16, at a first end,
   - to a rocker 18, at a second end,
- such rocker 18, also hinged to a second linkage 19,
- such second linkage 19, which is hinged:
   - to such rocker 18, at a first end,
   - to a stop element 20, at a second end,
- such stop element 20.

In particular, the rocker 18 comprises a flat body 21 with a tubular element 22 arranged at right angles to the plane of arrangement of the flat body 21, for the insertion of a first spacer 23 and/or a first pivot 24, which is not movable and is fixed to the chute 11.

The flat body 21 is adapted to lie on a plane that is perpendicular to the plane 1 of the chute 11 and parallel to the direction of extension of the chute 11.

The rocker 18 has, on either side of the tubular body 22 and parallel to it:
- a second pivot 25, which is movable and integral with the flat body 21, for pivoting to the first linkage 17,
- a third pivot 26, which is movable and integral with the flat body 21, for pivoting to the second linkage 19.

The rocker 18 has a raised portion 27, with an arc-like profile, which extends at right angles to the plane of arrangement of the flat body 21 in a position proximate to that of the third pivot 26 and parallel to the latter.

Advantageously, the raised portion 27 has an extension from the flat body 21 that is comparable to the width of the plane 1 of the chute 11.

The raised portion 27 has an arc-like profile with the curvature directed toward the actuation means 12.

The raised portion 27 is adapted to emerge from the floor of the chute 11, after the expulsion of the leading package, in order to block the next package, as explained below.

The stop element 20 comprises a substantially L-shaped body 28, the width of which is comparable to the width of the plane of the chute 11.

The body 28 is provided with a block 29 which has a through hole 30 for the insertion of a second spacer 31 and/or a fourth pivot 32, which is not movable and is fixed to the chute 11.

Such through hole 30 has an axis of extension that is parallel to the axis of extension of the tubular element 22, and parallel to the plane 1 of the chute 11.

The stop element 20 has a flat appendage 33 which extends from the block 29 and supports a fifth pivot 34, which is movable and integral with the flat appendage 33, for pivoting to the second linkage 19.

Such fifth pivot 34 has an axis of extension that is parallel to the axis of extension of the through hole 30 and of the second pivot 25.

In particular the flat body 21 and the flat appendage 33 lie on mutually parallel planes, and the second pivot 25 and the third pivot 26 have a direction of extension that is opposite to the direction of extension of the fifth pivot 34.

The body 28 of the stop element 20 has a wing 35 having an at least partially arc-like profile, which is substantially perpendicular to the block 29 and the width of which is comparable to the width of the plane 1 of the chute 11.

Such wing 35 has a curvature adapted to be directed toward the outside of the chute 11, therefore in the opposite direction to the actuation means 12.

The height of the wing 35 is such as to allow the stop element 20 to stop the advancement of packages even if they are of considerable height.

This characteristic is very important and extremely useful when operating with packages loaded vertically or inclined.

In particular the block 29 has a flat side 36 adapted to constitute a portion of the plane 1 of the chute 11 in the rest configuration of the device 10.

Such wing 35 has at least one portion which is perpendicular to the flat side 36 of the block 29.

The means 14 for varying the pushing power of the expelling and stopping assembly 13 comprise a first electronic board 37, which is provided with a CPU (Central Processing Unit) 38.

The first electronic board 37 is connected to the actuation means 12.

The first electronic board 37 is fixed directly to the chute 11 and enables a precise and flexible management of the movement of the rocker 18 and, as a consequence, of the device 10.

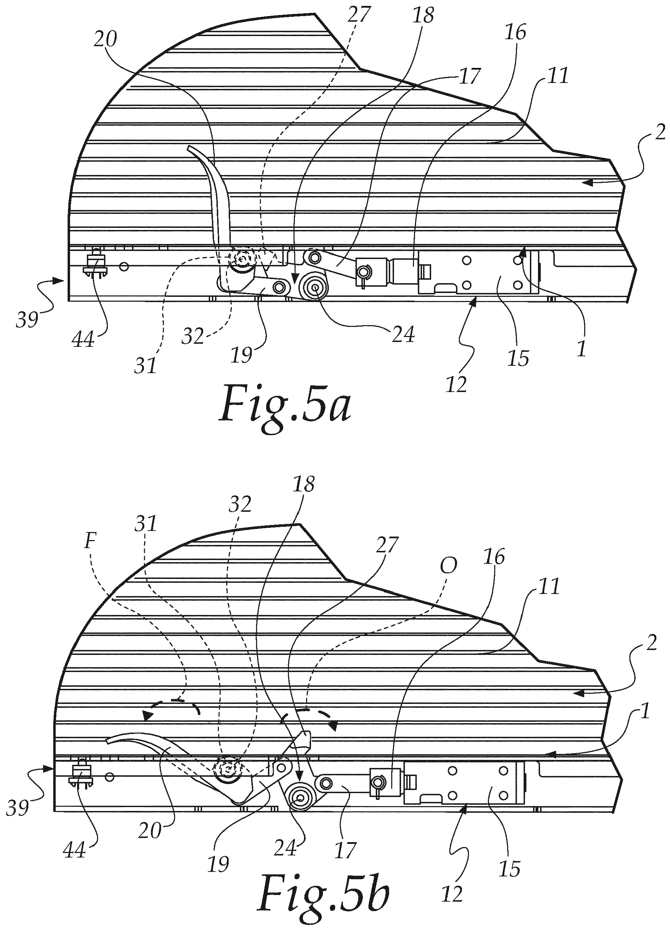

It is in fact possible to vary the pushing power, and therefore the speed, of the movement from the initial start position, for retaining the package (shown in Figure 5a), to the position for the expulsion/egress of the package (shown in Figure 5b), as a function of the characteristics of the latter, such as the weight, shape, dimensions, and materials of the package.

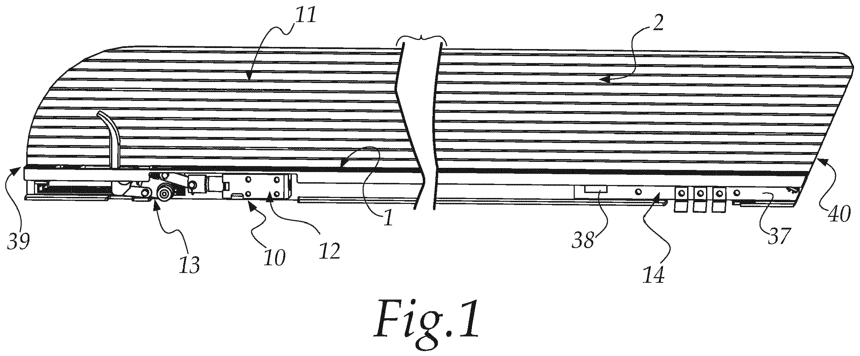

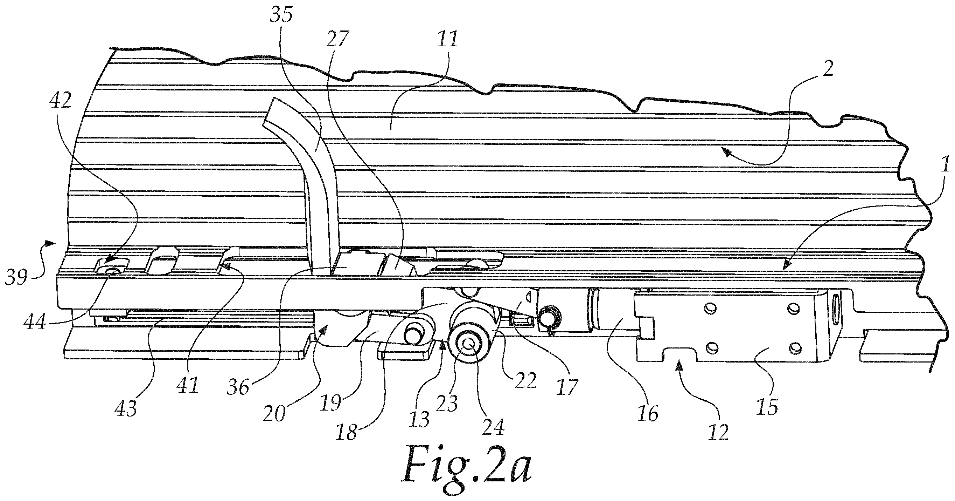

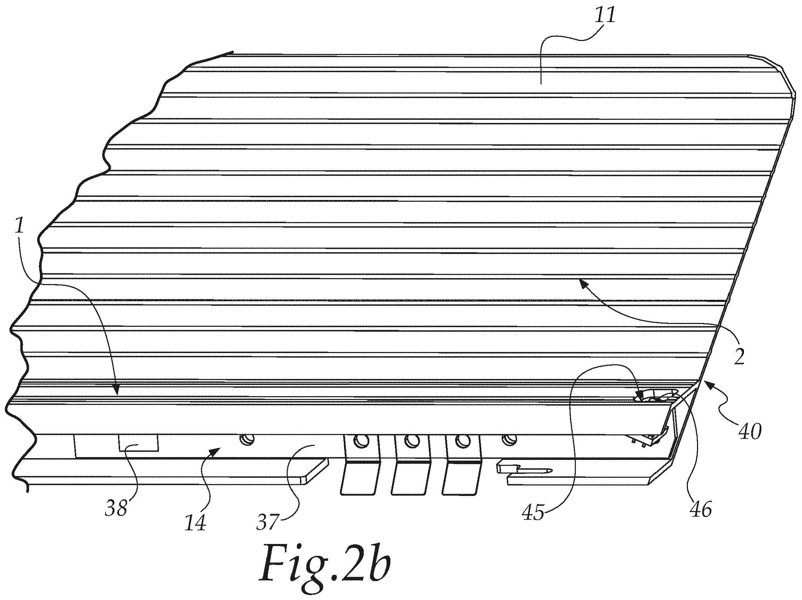

With reference to Figures 1, 2a, 2b, 5a and 5b, an inclined chute 11 for an_automated storage system, according to the invention, comprises a device 10, fixed below the plane 1, for supporting the packages, not shown in the figures.

In the present description, the terms "below", "above", "lower", "upper" and the like refer to the configuration for use of the inclined chute.

In particular, the chute 11 has:
- a lower end 39 for expelling the packages,
- an upper end 40 for loading the packages.

In particular the plane 1 of the chute 11 has a first opening 41, proximate to the lower end 39, from which the wing 35 of the stop element 20 and the raised portion 27 of the rocker 18 emerge in the configuration for unloading the packages, shown in Figure 5b.

The expelling and stopping assembly 13 is fixed below the plane 1 at the first opening 41.

The chute 11 has a second opening 42 on the plane 1, which is interposed between the first opening 41 and the lower end 39 of the chute.

The chute 11 comprises a second electronic board 43 fitted with a first optical sensor 44, arranged at the second opening 42, for detecting the expulsion of a package from the chute 11.

Such second electronic board 43 is fixed to the chute 11, below the plane 1, proximate to/at the first opening 41.

The first electronic board 37 is fixed to the chute 11 below the plane 1, proximate to the upper end 40.

The chute 11 has a third opening 45 on the plane 1, proximate to the upper end 40.

The first electronic board 37 is provided with a second optical sensor 46, arranged at the third opening 45, for detecting the loading of a package onto the chute 11.

The operation of the device 10 and of the chute 11, according to the invention, is the following.

According to the characteristics of the packages to be dispensed (weight, dimensions, materials, etc.), the CPU 38 on the first electronic board 37 adjusts the expulsion power that the expelling and stopping assembly 13 needs to apply during operation.

With reference to Figures 5a and 5b, when the dispensing of a package is commanded, the actuation means 12 are activated and, via the actuator 15, they cause a retraction of the rod 16 (Figure 5b).

By virtue of the retraction of the rod 16, a movement of the first linkage 17 takes place, which causes a rotation of the rocker 18 about the first pivot 24, in the direction indicated with O in Figure 5b.

Owing to this rotation of the rocker 18, the raised portion 27 emerges from the floor 1 of the chute through the first opening 41, thus determining:
- a pushing/lifting of the leading package, so facilitating its expulsion,
- a simultaneous arrest of the subsequent package, by creating an obstacle to its advancement.

The rotation of the rocker 18 also results in the movement of the second linkage 19 which in turn rotates the stop element 20 about the fourth pivot 32 in the direction indicated with the arrow F in Figure 5b.

In this manner, the wing 35 is lowered, allowing the egress of the package from the chute 11.

After the dispensing, a return spring, not shown in the figures and surrounding the rod 16, forces said rod 16 to make a translation in the opposite direction to the previous translation, so resulting in an excursion thereof that forces all the components of the assembly 13 to undergo movements opposite to those performed in the expulsion step, in order to return the assembly 13 to the arrest configuration (as shown in Figure 5a).

The second sensor 46, located proximate to the upper end 40 of the chute 11, makes safe loading possible given that the package can be released by the robotized arm of the storage system (not shown in the figures) only if the second sensor 46 stays engaged during the step of pre-positioning the package in the upper end 40 of the chute 11.

Furthermore, if the second sensor 46 stays engaged after the loading step as well, it makes it possible to provide an error zone in which the robotized arm can transit the area only via trajectories that avoid collision with the packages protruding from the initial (upper) part of the chute, which are stuck at the chute inlet for unforeseeable/uncontrollable reasons such as, for example, packages that are open, broken, or dirty.

The first sensor 44, located at the lower end 39 of the chute 11, makes it possible to verify whether or not the package has been expelled from the chute 11.

In the event of a failed expulsion of the package, the first sensor 44 sends a signal to direct the robotized arm, provided with a measurement laser, to conduct a verification by counting the packages actually present inside the chute 11 or the corresponding measurement of the sum of the depths of the individual boxes contained in the chute.

If this verification returns the same information, i.e. if the package has not been expelled, given that the same number of packages has been found inside the chute, then a second attempt at expulsion will be performed.

And if after this second attempt it is found that the package still has not been expelled, then the manipulator (not shown in the figures) is tasked with a second verification, via laser measurement of the free space in the chute, while the settings enable the temporary blocking of the chute 11 owing to problems with expelling the specific package.

The first electronic board 37 provided with a CPU 38 makes it possible to recognize whether the sensors 44, 46 are engaged owing to a package that has inadvertently become stuck above them.

If the packages should become stuck at the ends 39, 40 of the chute 11, i.e. above the sensors 44, 46, then the first electronic board 37 provided with a CPU 38 can generate vibrations in the structure of the chute 11 in order to make the package slide inside the chute 11, if the second sensor 46 is affected, or make the package exit from the chute 11, if the first sensor 44 is affected.

This particular vibration of the chute 11 is achieved by a particular waveform of the control signal of the electromagnetic actuator 15 connected to the expelling and stopping assembly and of the associated frequency level.

It should be noted that, by way of the CPU 38 of the first electronic board 37 on board the chute 11, it is possible to have continuous and immediate verification of the status of the chute and of the quality of transmission of the data packets, preserving them from possible interference even if there are high numbers of boards/chutes (within a single storage system), a great number of signals, great lengths of wires and/or external interference like electromagnetic fields generated by other equipment nearby.

It should be noted that the wing 35 of the stop element 20 can be of different height and shape according to requirements, in order to be able of operating even with packages of considerable dimensions.

In practice it has been found that the invention fully achieves the intended aim and objects by providing a device for retaining and expelling packages from an inclined chute of an automated storage system, and a chute with such a device, which make it possible to avoid the unwanted expulsion of packages from the chute, even for packages of considerable bulk and/or weight.

According to the invention a device for retaining and expelling packages from an inclined chute of an automated storage system, and a chute with such a device, have been devised which make it possible to vary the pushing power, and therefore the speed, of the movement from the initial start position, for retaining the package, to the position for the expulsion/egress of the package, as a function of the characteristics of the latter, such as the weight, shape, dimensions, and materials of the package.

Furthermore, with the invention a device for retaining and expelling packages from an inclined chute of an automated storage system, and a chute with such device, have been provided which enable an automatic verification of the successful expulsion of the selected package.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102023000008331 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A device (10) for retaining and expelling packages from an inclined chute (11) of an automated storage system, said device (10) being **characterized in that** it comprises:
- actuation means (12) for actuation of an expelling and stopping assembly (13) for expelling and stopping one or more packages,
- said expelling and stopping assembly (13),
- means (14) for varying the pushing power of said expelling and stopping assembly (13).

2. The device (10) according to claim 1, **characterized in that** said actuation means (12) comprise an electromagnetic actuator (15) which supports an actuation rod (16).

3. The device (10) according to claim 1, **characterized in that** said expelling and stopping assembly (13) comprises:
- a first linkage (17), hinged:
- to said rod (16), at a first end,
- to a rocker (18), at a second end,
- said rocker (18), also hinged to a second linkage (19),
- said second linkage (19), hinged:
- to said rocker (18), at a first end,
- to a stop element (20), at a second end,
- said stop element (20).

4. The device (10) according to claim 3, **characterized in that** said rocker (18) comprises a flat body (21) with a tubular element (22) arranged at right angles to the plane of arrangement of said flat body (21), for the insertion of a first spacer (23) and/or a first pivot (24), which is not movable and is fixed to said chute (11), said flat body (21) being adapted to lie on a plane that is perpendicular to the plane (1) of said chute (11) and parallel to the direction of extension of said chute (11), said rocker (18) having, on either side of said tubular body (22) and parallel to it:
- a second pivot (25), which is movable and integral with said flat body (21), for pivoting to said first linkage (17),
- a third pivot (26), which is movable and integral with said flat body (21), for pivoting to said second linkage (19).

5. The device (10) according to one or more of the preceding claims, **characterized in that** said rocker (18) has a raised portion (27), with an arc-like profile, which extends at right angles to the plane of arrangement of said flat body (21) in a position proximate to that of said third pivot (26) and parallel thereto, said raised portion (27) having an extension from said flat body (21) that is comparable to the width of said plane (1) of said chute (11), said raised portion (27) having an arc-like profile with the curvature directed toward said actuation means (12).

6. The device (10) according to one or more of the preceding claims, **characterized in that** said stop element (20) comprises a substantially L-shaped body (28) with a width comparable to the width of said plane (1) of said chute (11), said body (28) having a block (29) with a through hole (30) for the insertion of a second spacer (31) and/or a fourth pivot (32), which is not movable and is fixed to said chute (11), said through hole (30) having an axis of extension that is parallel to the axis of extension of said tubular element (22) and parallel to said plane (1) of said chute (11), said stop element (20) having a flat appendage (33) which extends from said block (29) and supports a fifth pivot (34), which is movable and integral with said flat appendage (33), for pivoting to said second linkage (19), said fifth pivot (34) having an axis of extension that is parallel to the axis of extension of said through hole (30) and of said second pivot (25).

7. The device (10) according to one or more of the preceding claims, **characterized in that** said flat body (21) and said flat appendage (33) lie on mutually parallel planes, and said second pivot (25) and said third pivot (26) have a direction of extension that is opposite to the direction of extension of said fifth pivot (34).

8. The device (10) according to one or more of the preceding claims, **characterized in that** said body (28) of said stop element (20) has a wing (35) having an at least partially arc-like profile, which is substantially perpendicular to said block (29) and has a width comparable to the width of said plane (1) of said chute (11), said wing (35) having a curvature adapted to be directed in the opposite direction to said actuation means (12), said block (29) having a flat side (36) adapted to constitute a portion of said plane (1) of said chute (11) in the rest configuration of said device (10), said wing (35) having at least one portion which is perpendicular to said flat side (36) of said block (29).

9. The device (10), according to one or more of the preceding claims, **characterized in that** said means (14) for varying said pushing power of said expelling and stopping assembly (13) comprise a first electronic board (37) provided with a CPU (38), said first electronic board (37) being connected to said actuation means (12).

10. An inclined chute (11) for an automated storage system, **characterized in that** it comprises a device (10) according to one or more of the preceding claims.

11. The chute (11) according to the preceding claim, **characterized in that** it has:
- said plane (1),
- a lower end (39) for expelling the packages,
- an upper end (40) for loading the packages,
said plane (1) having a first opening (41) proximate to said lower end (39), said wing (35) of said stop element (20) and said raised portion (27) of said rocker (18) emerging from said first opening (41) in the configuration for unloading said one or more packages, said expelling and stopping assembly (13) being fixed below said plane (1) at said first opening (41).

12. The chute (11) according to one or more of claims 10 and 11, **characterized in that** it has a second opening (42) on said plane (1), which is interposed between said first opening (41) and said lower end (39) of said chute (11), said chute (11) comprising a second electronic board (43) fitted with a first optical sensor (44), arranged at said second opening (42), for detecting the expulsion of a package from said chute (11).

13. The chute (11) according to one or more of claims 10 to 12, **characterized in that** said first electronic board (37) is fixed to said chute (11) below said plane (1) proximate to said upper end (40), said chute (11) having a third opening (45) on said plane (1) proximate to said upper end (40), said first electronic board (37) being provided with a second optical sensor (46), arranged at said third opening (45), for detecting the loading of a package onto said chute (11).
